Europäisches Patentamt

European Patent Office

Office européen des brevets

(19)

(11) Publication number: **0 053 016**
A2

(12) # EUROPEAN PATENT APPLICATION

(21) Application number: **81305487.1**

(22) Date of filing: **20.11.81**

(51) Int. Cl.³: **C 11 B 3/10**
**B 01 J 20/16, A 23 G 1/00**

(30) Priority: **20.11.80 GB 8037249**

(43) Date of publication of application:
**02.06.82 Bulletin 82/22**

(84) Designated Contracting States:
**AT BE CH DE FR GB IT LI NL SE**

(71) Applicant: **UNILEVER PLC**
Unilever House Blackfriars P O Box 68
London EC4P 4BQ(GB)

(84) Designated Contracting States:
**GB**

(71) Applicant: **UNILEVER NV**
Burgemeester 's Jacobplein 1
NL-3000 DK Rotterdam(NL)

(84) Designated Contracting States:
**BE CH DE FR IT LI NL SE AT**

(72) Inventor: **Bringi, Naganathan Viswanath** Flat No. 3
Blooming Heights Cooperative Housing Society, 4
Pali Hill Bandra Bombay 400 040(IN)

(72) Inventor: **Chandrasekaran, Krishnamoorthi** Flat 51
Bina Apartments 88 Sir Mathuradas Vissanji Road
Andheri East Bombay 400 069(IN)

(72) Inventor: **Kalbag, Shrinath Sheshgiri**
Iora 6 Silver Sands
Juhu Tara Bombay 400 054(IN)

(72) Inventor: **Murthy, Ramaraju Sreerama**
7 Bina Apartments MV Road
Andheri East Bombay 400 069(IN)

(74) Representative: **Litherland, Donald et al,**
Unilever PLC Patent Division PO Box 31 Salisbury
Square House
Salisbury Square London EC4 4AN(GB)

(54) Fat refining.

(57) Fats especially sal fat used in chocolate are prepared by contact with a specially prepared amorphous alumina-silica co-gel, especially to remove impurities which are present only in minor amounts but which have a marked effect on the melting quality and colour of the fat.

TITLE :   FAT REFINING

This invention relates to purification of sal fat.

The tree Shores robusta of India is related botanically to S. stenopters,  the source of Borneo tallow, and yields a vegetable fat similar in its chemical constitution and physical properties.   Like Borneo tallow, the fat of S. robusta, known as sal fat, is prized particularly for its sharp melting characteristics in the region of body temperature and is used as a constituent in commercially valuable edible and non-edible formulations.   In the manufacture of cocoa butter substitutes there is a need for fat containing the specific 2-oleyl disaturated triglycerides, principally of palmitic and/or stearic acid.   Sal fat is among the few vegetable fat sources rich in these components, especially the stearine fractions of the fat. Thus, on acetone fractionation a solid stearine can be obtained from sal fat in 50-70% yield which contains approximately 80% SOS glyceride, depending upon the quality of the fat.

Apart from having light colour, a critical feature of fats for the uses described above is their melting behaviour. This may be examined by determination of the dilatations of the fat by standard procedures. It has been found that a good sample of sal fat will show a $D_{30}$ value 1000-1500 and $D_{35}$ value 50-300, indicating a steep melting behaviour. On the other hand, samples which melt no less steeply may still be inferior and unsatisfactory because they melt at substantially lower temperatures.

The inferior melting characteristics described are frequently not attributable to substantial differences in the triglyceride composition of the fats and cannot be effectively improved by the usual fat refining techniques or by careful fractionation. The present invention is based upon the discovery that the inferior melting behaviour in such cases is attributable to the presence in the fat of comparatively small quantities of minor constituents, which are mainly oxidised compounds and of other partial glycerides. These may be removed to provide a marked improvement in the melting characteristics of the fat. Two of these constituents have been characterised as a triglyceride containing 2 moles of saturated fatty acid and one mole of 9-10 epoxy stearic acid (conveniently referred to as Factor 'P'), and another variety of triglyceride containing 2 moles of saturated fatty acid and one mole of 9, 10 dihydroxy stearic acid (conveniently referred to as Factor 'Q'). There may also be other transformation products of these and other constituents.

0053016
pA.193

The present invention therefore concerns a process for improvement of the quality of sal fat in terms of dilatation as well as colour by preferential removal of substantial quantities of these minor constituents together with colouring matter compounds.

According to this invention there is provided a process for the purification of sal fat to remove, at least partially, the minor constituents which are responsible for its inferior melting behaviour, together with the colouring compounds, by physical adsorption by contacting sal fat with a specially developed co-gelled silica-alumina adsorbent. Other fats, especially those used in chocolate, may similarly be purified.

The contacting of sal fat with the silica-alumina adsorbent for removal of the desired constituents is conveniently done in the liquid phase and for this the sal fat is first mixed with an organic solvent, preferably a volatile organic solvent like hexane or benzene.

The concentration of sal fat in the organic solvent is between 5 and 60 per cent by weight of the solution, but preferably it is between 5 to 30 per cent by weight.

The treatment is done advantageously at temperature below the boiling point of the solvent used eg 10-30$^{\circ}$C.

The co-gelled silica-alumina adsorbent may be dispersed in a solution of the sal fat and after treatment the adsorbent recovered by filtration.

When the adsorbent is dispersed in a solution of sal fat in organic solvent, the adsorbent is preferably used in amounts of 0.3 to 3 parts by weight per part of the sal fat content in the solution.

Alternatively, the sal fat solution is passed through a bed of the co-gelled silica-alumina adsorbent.

The adsorbent may be regenerated by desorption using a solvent which is more polar than the solvent used for making the sal fat solution.

The co-gelled silica-alumina adsorbent is advantageously pre-activated before contacting with the sal fat.

The activation of the co-gelled silica-alumina adsorbent is carried out by heating the material at elevated temperatures like $100^{\circ}$-$500^{\circ}$C, but preferably at $100^{\circ}$-$200^{\circ}$C for sufficient time (ca. 4 hours) to drive away the water.

The silica-alumina adsorbent is prepared by co-gelling silica and alumina by adding an acidic solution containing aluminium ions to a silicate solution. The amounts of reactants and their concentrations will be selected to give an adsorbent with an alumina content between 0.1 and 25%, preferably up to 13% and more preferably between 0.5 and 9%. A suitable source of aluminium ions is a solution of aluminium sulphate in dilute sulphuric acid. Usually sodium silicate will be used. The final pH is adjusted to 7, after which the hydrogel of silica-alumina is aged for 2 hours before it is washed free of sulphate ions. Any residual sodium ion may be optionally removed by exchanging with ammonium chloride solution. The hydrogel is then dried at $100^{\circ}$C and the dried gel (i.e. the co-gelled silica-alumina) is activated at the desired temperature and finally crushed to the required particle size of 100 mesh.

0053016

pA.193

The sequence of addition of ingredients is very important for the preparation of an efficient silica-alumina adsorbent. A better adsorbent is obtained by adding aluminium sulphate solution to sodium silicate solution. This is illustrated in Example 8.

We have studied the behaviour of sal fat by comparing the performance of co-gelled silica-alumina adsorbent with the commonly known adsorbent silica gel.

It has been found that co-gelled silica-alumina adsorbent is superior to silica gel in that the colouring matter/compounds are removed better with silica-alumina than with silica gel, although Factors 'P' and 'Q' are removed to more or less the same extent with both adsorbents Partial glycerides are also largely removed in the process.

The silica-alumina adsorbent can be roused a number of times for treating fresh batches of sal fat, after desorption by a more polar solvent such as ether, ether-methanol, or hexane-isopropanol or any other mixture of solvents known in the art for increasing the polarity of hexane, followed by activation of the silica-alumina adsorbent at $70^{\circ}$ to $200^{\circ}C$ for about 1 hour.

The amount of the undesirable minor constituents present may be determined by subjecting the sal fat or the stearine to Thin Layer Chromatography (TLC) and isolating and weighing the fractions of substrate produced. The method has been described by Belavadi V. K., Kamat P.L., Mehta D.T., Bhaskar Anil and Bringi, N.V., J. Oil Technologists Assoc., India, 1979, 11, 3.

The invention will now be more fully explained with reference to the accompanying examples wherein we have studied the behaviours of both silica gel and the new co-gelled silica-alumina.  Examples 1 and 2 relate to the use of common silica gel and other examples relate to the use of the new co-gelled silica-alumina adsorbent prepared as described and used at room temperature (RT)ie 20 - 30°C.


Example 1:

The experiment was done with a sample of raw sal fat (FFA, 3.2%) which has been stored for about 2 years in the laboratory.  A solution of raw sal fat (20 g) in hexane (100 ml) was stirred for 2 hours at room temperature (RT) (28°C) with 2 different proportions of chromatographic grade silica gel (previously activated at 120° for 30 minutes), namely 1 : 0.375 and 1 : 1.  The slurry was filtered and silica gel washed with 100 ml hexane and the combined filtrate was evaporated to obtain the improved sal fat.  The dilatation characteristics of the fat before and after the treatment are shown below:

|  | Dilatations of raw sal fat | Dilatations of improved sal fat | |
|---|---|---|---|
|  |  | 1 : 0.375 | 1 : 1 |
| $D_{20}$ | 900 | 1610 | 1825 |
| $D_{30}$ | 225 | 1410 | 1600 |
| $D_{35}$ | 50 | 370 | 640 |

The improved fat was recovered in a yield of 90% when the fat : silica gel ratio was 1 : 0.375 and in 75% yield when fat : silica gel ratio was 1 : 1.

Example 2:

The solution of raw sal fat of the quality described in Example 1 (25 g) in hexane (150 ml) was stirred (magnetic stirrer) with chromatographic grade silica gel (25 g) for 2 hours at R.T. The adsorbent was filtered and the filtrate is distilled to obtain the improved fat. The once used silica gel was stirred with hexane-isopropanol azeotrope (78 : 22 v/v; 150 ml) for 2 hours at R.T. and this regeneration step was repeated 4 times to remove adsorbed compounds and colour and finally with hexane (150 ml) alone to remove isopropanol. The regenerated silica gel was used a second time and a similar procedure was followed for third and subsequent uses after activation at $120^{\circ}$ for $\frac{1}{2}$ hour. In this particular experiment silica gel was used 10 times and dilatation characteristics of the improved fat are recorded below:

| Number of reuse | Dilatations of improved fat | | |
| --- | --- | --- | --- |
| | $D_{20}$ | $D_{30}$ | $D_{35}$ |
| 1 | 1750 | 1500 | 440 |
| 6 | 1800 | 1500 | 500 |
| 8 | 1750 | 1510 | 425 |
| 10 | 1730 | 1480 | 400 |

The average yield of improved fat in above experiments was 80%.

It is seen that the quality of sal fat in terms of dilatations has improved from a stating $D_{30}$ of 225 to about 1,500. The Lovibond colour of the pooled sample from the ten experiments was 32.5 in $\frac{1}{4}$" cell.

Example 3:

A solution of raw sal fat of the quality described in Example 1 (25 g), in hexane (150 ml) was stirred for 2 hours at R.T. with co-gelled silica-alumina pre-activated at 500°C (25 g). The adsorbent was filtered and the filtrate was distilled to obtain the improved fat. The adsorbent was reused five times after desorption and activation as described in Example 2. The dilatations are recorded below:

| Number of uses | Dilatations of improved fat | | |
| --- | --- | --- | --- |
| | $D_{20}$ | $D_{30}$ | $D_{35}$ |
| 1 | 1730 | 1500 | 400 |
| 2 | 1680 | 1450 | 300 |
| 3 | – | – | – |
| 4 | 1660 | 1440 | 300 |
| 5 | 1670 | 1410 | 280 |

The colour of the pooled sample was 11 in $\frac{1}{4}$" cell. The average yield of the improved fat in above experiments was 78%.

Example 4:

Raw sal fat of the quality described in Example 1, was refined by 3 N NaOH and brine, and the refined fat dissolved in hexane, (1 : 5, w/v) was bleached with 6% active earth and 1% carbon. The characteristics of the refined, bleached fat were as follows:

| Colour | : | (27.9 Y + 0.9 R) in $\frac{1}{2}$" cell |
|---|---|---|
| $D_{20}$ | : | 1450 |
| $D_{30}$ | : | 1280 |
| $D_{35}$ | : | 180 |
| Factor 'P' | : | 4% |
| Factor 'Q' | : | 5% |

A solution of the above fat (25 g) in hexane (150 ml) was stirred with co-gelled silica-alumina (preactivated at 500°C, 25 g) for 2 hours at R.T. In another experiment silica gel was used in place of the silica-alumina adsorbent. The characteristics of the improved fat are shown below:

| Characteristics | Silica Gel | Co-gelled silica-alumina adsorbent |
|---|---|---|
| Colour ( Y + 5R) in $\frac{1}{2}$" Cell) | $(27.9 \overset{30}{Y} + 0.4 R)$ | $(4 \overset{6}{Y} + 0.4 R)$ |
| Factor 'P' % | 1.1 | 1.1 |
| Factor 'Q' % | Nil | Nil |
| $D_{20}$ | 1680 | 1700 |
| $D_{30}$ | 1430 | 1520 |
| $D_{35}$ | 300 | 430 |

The effectiveness of silica-alumina adsorbent in improving the colour is quite evident. Factor 'Q' is completely removed by both the adsorbents while Factor 'P' is removed only partially. Both the adsorbents are largely similar in improving the dilatations.

Example 5:

A sample of raw sal fat (500 g) from 1977 crop (FFA 11%) dissolved in hexane (2 lit) was stirred with 6% earth (30 g) and 1% carbon (5 g) for 1 hour at RT at the boiling point of hexane. This fat (100 g) was dissolved in hexane (500 ml) and stirred with preactivated co-gelled silica-alumina adsorbent, was filtered and filtrate was distilled to get the improved fat. The adsorbent was used five times after desorption and activation as described in Example 2. The pooled sample (FFA, 6.4%) was refined with 7N $Na_2CO_3$ and the characteristics of the refined fat are shown below:

Characteristics:

|  |  |
|---|---|
| $D_{20}$ | 1720 |
| $D_{30}$ | 1430 |
| $D_{35}$ | 120 |
| Factor 'P' | 1% |
| Factor 'Q' | Nil |
| Diglycerides | 2% |

For comparison, the raw sal fat was refined by $Na_2CO_3$ and its characteristics are shown below:

|  |  |
|---|---|
| $D_{20}$ | 1420 |
| $D_{30}$ | 1140 |
| $D_{35}$ | 60 |
| Factor 'P' | 1% |
| Factor 'Q' | 2.5% |
| Diglycerides | 7.7% |

These data reveal that the quality of sal fat with high FFA is also improved by silica-alumina treatment. The diglycerides content is reduced to 2%. Like in previous example Factor 'Q' is also removed completely.

0053016
pA.193

Example 6:

Solutions of miscella bleached raw sal fat
(100 g) in hexane   (500 ml) were stirred for ½ hour at
room temperature with silica-alumina adsorbent A (i.e.
activated at 500°C) and silica-alumina adsorbent B
(i.e. activated at 180°C) (100 g) respectively.   Other
steps of recovery of upgraded fat, regeneration and
reactivation of adsorbent for subsequent reuses are the
same as described in previous examples.   Each experiment consisted of 5 cycles and upgraded fats from second
to fifth cycles were pooled for analysis and refining
studies.

The yields and characteristics of the upgraded
fats are shown in the following table:

| Character-istics | 1977 Fat | | | 1978 Fat | | |
|---|---|---|---|---|---|---|
| | Before Adsorption. | After Adsorption | | Before Adsorption | After Adsorption | |
| | | Adsor-bent 'A' | Adsor-bent 'B' | | Adsor-bent 'A' | Adsor-bent 'B' |
| | % | % | % | % | % | % |
| FFA | 11.2 | 10 | 6.4 | 8.5 | 8.5 | 5.6 |
| Diglyc-rides | 7.7 | 3 | 1.8 | 5.3 | 3.5 | 1 |
| Factor 'P' | 1 | 1 | 1 | 3.2 | 2 | ND |
| Factor 'Q' | 2.5 | Nil | Nil | 2.5 | Nil | Nil |
| Yield % | | 78 | 80 | | 82 | 78 |

This example shows that diglycerides are removed better with adsorbent activated at 180°C than that activated at 500°C. A similar experiment with silica-alumina adsorbent activated at 120°C gave results comparable to Adsorbent 'B'.

Example 7:

Three different samples of silica-alumina adsorbent were prepared according to procedure described on p.4 & 5 with activation temperature at 120°C, with different amounts of alumina so that final composition of the co-gelled adsorbent contained 5, 9, and 25% alumina. Their efficiency for removal of diglycerides from sal fat were examined by passing the sal fat hexane miscella (600 g of 20% solution of the fat in hexane) at RT through columns of adsorbent (100 g) in turn and the effluent streams were analysed for their diglyceride content. The columns were $1\frac{1}{2}$ inch diameter and the feed rate 1.5cc/minute.

The results are shown below:

| Alumina Content of Silica-Alumina Adsorbent wt % | Diglyceride content of Sal Fat wt % | |
|---|---|---|
| | Before Treatment | After Treatment |
| 5 | 9 | Nil |
| 9 | 9 | Nil |
| 25 | 9 | 3.5 |

This example shows that silica-alumina adsorbents with both 5 and 9 percentages of alumina were efficient for removing diglycerides, whereas the sample with 25% alumina was not as efficient.

## Example 8:

In addition to method of preparation, this example illustrates the importance of sequence of addition of ingredients for producing a more efficient silica-alumina adsorbent. For the sake of convenience, the sequence where aluminium sulphate is added to sodium silicate the resultant adsorbent has been termed as 'X', whereas in the case where the sodium silicate is added to aluminium sulphate the adsorbent so obtained has been termed as 'Y'.

## Preparation of Silica-Alumina - 'X':

To a solution of 0.34 kg neutral sodium silicate in 3.4 kg water, was added a solution of 0.07 kg of aluminium in sulphate in dilute sulphuric acid (0.03 kg $H_2SO_4$ in 0.3 kg $H_2O$). The pH at the end of addition was adjusted to 7.0. The hydrogel was aged for 2 hours and it was washed free of sodium sulphate. The residual sodium ions were further removed by addition of ammonium chloride solution (5%) and subsequent filtration. The material was dried at $120^\circ C$ and was activated at $500^\circ C$ before use.

## Preparation of Silica-Alumina - 'Y':

The sample was prepared exactly as above except that the sodium silicate solution was added to the solution of aluminium sulphate in sulphuric acid.

## Sal Fat Upgrading Experiment:

Samples of sal fat were purified by passing a miscella of sal fat and hexane through a column of adsorbent 25 cm x 1 cm and the results are given below:

| Adsorbent | Sal Fat upgraded (wt/wt) of adsorbent |
|---|---|
| Silica-Alumina 'X' | 1.1 |
| Silica-Alumina 'Y' | 0.4 |

This example shows the superiority of Silica-Alumina 'X' over Silica-Alumina 'Y' in upgrading sal fat, i.e., the sequence of addition of reagents is important in preparing the adsorbent.

\* \* \* \*

## C L A I M S

1. Process for purifying fat comprising contacting the fat in liquid phase with a co-gelled silica-alumina adsorbent and separating the fat from the adsorbent.

2. Process according to Claim 1 wherein the fat is in admixture with an organic solvent.

3. Process according to Claim 2 wherein the solvent comprises hexane.

4. Process according to Claim 2 or 3 wherein the fat is dissolved in the solvent in a concentration of 5-60% by weight of the solution.

5. Process according to Claim 4 wherein the concentration of said solution is from 5-30 weight per cent of the solution.

6. Process according to any of the preceding Claims 2 to 5 wherein the adsorbent is dispersed in the fat solution in an amount from 0.3-3 parts by weight per part of fat by weight.

7. Process according to any of the preceding Claims 2 to 5 wherein the solution of fat is passed through a bed of the adsorbent.

8. Process according to any of the preceding claims wherein the fat comprises sal fat.

9. Process according to any of the preceding claims wherein the alumina content of the adsorbent is between 0.1 and 25%.

3BE116

10. Process according to Claim 9 wherein the alumina content of the adsorbent is between 0.5 and 9%.

11. Process according to any of the preceding claims wherein the adsorbent is activated before contact with the fat, by heating the adsorbent at a temperature from 100-500°C.

12. Process according to Claim 11 wherein the adsorbent is activated by heating from 100-200°C for approximately four hours.

13. Process according to any of the preceding claims 2 to 12 wherein the adsorbent is regenerated after use by contact with a solvent more polar than the fat solvent.

14. Process according to Claim 13 wherein the fat solvent comprises hexane and the regeneration solvent is ether or mixtures of ether/methanol or hexane/isopropanol.

15. Process according to any of the preceding claims wherein the particle size of the adsorbent is approximately 100 mesh.

16. Process according to any of the preceding Claims 2 to 15 wherein the fat is contacted with the adsorbent at a temperature below the boiling point of the solvent.

17. Process according to Claim 1 substantially as herein before described with reference to the accompanying Examples.

18.    Process for the preparation of a silica-alumina
adsorbent suitable for use in a process as claimed in Claim
1 which comprises admixing an acid solution of aluminium
sulphate with a silicate solution in an amount giving an
alumina content between 0.1 and 25%, adjusting the final pH
to 7 and washing the hydrogel obtained free from sulphate
ions, drying and activating the co-gel by heat treatment
from 100-500°C.

19.    Process according to Claim 18 wherein the aluminium
sulphate solution is added to the silicate solution.

20.    An amorphous, activated, silica-alumina co-gel
adsorbent suitable for use in the process as claimed in any
of the preceding Claims 1 to 17.

21.    Sal and other fats wherever prepared by a process as
claimed in Claims 1 to 17.

*****